# EUROPÄISCHE PATENTSCHRIFT

(11) **EP 3 093 321 B1**
(45) Veröffentlichungstag und Bekanntmachung des Hinweises auf die Patenterteilung: **07.06.2023**
(21) Anmeldenummer: 16000902.3
(22) Anmeldetag: 21.04.2016
(51) Int. Cl.: C09D 191/06, C08L 91/06, C08L 97/02

(54) **WACHSDISPERSION, VERWENDUNG VON WACHSDISPERSIONEN ALS HYDROPHOBIERUNGSMITTEL IN HOLZWERKSTOFFEN UND VERFAHREN ZUR HERSTELLUNG VON HOLZWERKSTOFFEN MIT DIESEN WACHSDISPERSIONEN**
WAX DISPERSION, USE OF WAX DISPERSIONS AS HYDROPHOBIZING AGENTS IN WOODEN MATERIALS AND METHOD FOR MANUFACTURING WOODEN MATERIALS WITH THESE WAX DISPERSIONS
DISPERSION DE CIRE, UTILISATION DE DISPERSIONS DE CIRE EN TANT QU'AGENT HYDROPHOBE DANS DES MATIERES DERIVEES DU BOIS ET PROCEDE DESTINE A LA FABRICATION DE MATIERES DERIVEES DU BOIS AU MOYEN DESDITES DISPERSIONS DE CIRE

(30) Priorität: 15.05.2015 DE 102015006290
(43) Veröffentlichungstag der Anmeldung: 16.11.2016
(73) Patentinhaber: Buchholz, Thomas, 21391 Reppenstedt (DE)
(72) Erfinder: BUCHHOLZ, Thomas, 21391 Reppenstedt (DE)
(74) Vertreter: Hofmeister, Frank

(56) Entgegenhaltungen:
- DE-A1-102007 024 261
- DE-A1-102008 011 163
- US-A1- 2009 197 105

## Beschreibung

Gegenstand der Erfindung sind Wachsdispersionen enthaltend mindestens zwei unterschiedliche Wachsfeststoffe, deren Herstellung und deren Verwendung als Hydrophobierungsmittel bei der Herstellung von Holzwerkstoffen. Weiterhin betrifft die Erfindung ein Verfahren zur Herstellung von Holzwerkstoffen unter Verwendung von Fasern, Spänen oder Strands enthaltend oder bestehend aus Lignocellulosen durch Kontaktierung mit den Wachsdispersionen.

Vielfach ist es gewünscht Wasseraufnahme und Quellneigung von Holzwerkstoffen zu reduzieren oder es machen gesetzliche oder auch Kundenanforderungen das Einhalten von Grenzwerten für die Wasseraufnahme, das Quellenvermögen und die Querzugfestigkeit derartiger Werkstoffe oder deren Weiterverarbeitungsprodukte notwendig. Nach in Europa geltenden Normen (DIN EN 622 und DIN EN 312) müssen z.B. Holzwerkstoffe bestimmten Anforderungen in Bezug auf die Dickenquellung bei Unterwasserlagerung, der Wasseraufnahme und der Querzugfestigkeit genügen.

Um die geforderten Grenzwerte für die Wasseraufnahme und das Quellvermögen einzuhalten, werden viele Holzwerkstoffe beim Produktionsprozess mit Hydrophobierungsmitteln versehen. Hierbei soll das Hydrophobierungsmittel zum einen die mechanische Stabilität der Holzwerkstoffe wie beispielsweise die Querzugfestigkeit nicht beeinträchtigen, sondern möglichst positiv beeinflussen und seinerseits keinen unnötigen Wassereintrag notwendig machen und die Weiterverarbeitung des Holzwerkstoffs nicht behindern, insbesondere wenn die hydrophobierten Einsatzstoffe in Form von Spänen, Strands oder Fasern vorliegen und die Weiterverarbeitungsprodukte durch Zusammenfügen aus den Strands, Spänen oder Fasern hergestellt sind, z.B. mittels thermischem Abbinden, Verpressen oder Verkleben mit entsprechenden Bindemitteln.

Die Anwendung von Wachsen in bzw. auf Holzwerkstoffen bzw. deren Einsatzstoffen enthaltend bzw. bestehend aus Lignocellulosen als Hydrophobierungsmittel, auch in Form wässriger Dispersionen, ist an sich bekannt. Beispielhaft sei die Hydrophobierung von Holzwerkstoff -Rohstoffen mit Fischer-Tropsch-Paraffinen gemäß EP 1 448 345 B1 und auch die Verwendung von Alphaolefinwachsen gemäß EP 2 252 658 B1 genannt.

Die Optimierung der Hydrophobierwirkung von Wachsdispersionen beim Einsatz in Holzwerkstoffen kann weiterhin durch Modifikation der Zusammensetzung der Wachsphase herbeigeführt werden. Beispielhaft sei hier der Zusatz von Additiven wie veresterten aliphatischen polycyclischen Carbonsäuren entsprechend DE 10 2007 024 261 A1 zu nennen. Weiterhin ist auch bekannt, die Hydrophobierungswirkung von Wachsdispersionen bei der Herstellung von Holzwerkstoffen durch eine Reduktion der Partikelgröße auf <500 nm entsprechend EP 2 001 643 B2 zu verbessern. Zur Hydrophobierung von aus Lignocellulosen bestehenden Holzwerkstoffen mit Paraffin sind eine Reihe von Untersuchungen bekannt. Hierzu ist z.B. auf den Aufsatz von Roffael, E., Schriever, E., May, H.-A., Adhäsion 11(1982), S.10- 19, "Hydrophobierung von Spanplatten mit Paraffin", Teil 1 und auf die Veröffentlichung von May, H.-A.und Roffael, E. "Hydrophobierung von Spanplatten mit Paraffinen", Teil 4 (Adhäsion 28, (1,2), 17-21) hinzuweisen. In Abb.5 letztgenannter Veröffentlichung wird der Einfluss verschiedener Paraffinwachstypen auf die Querzugfestigkeit von Holzwerkstoffen dargestellt. Jedoch sind weitere Verbesserungen wünschenswert.

Bei der aus dem Stand der Technik bekannten Hydrophobierung mittels Wachsdispersionen werden die eingesetzten Wachse zunächst aufgeschmolzen und miteinander vermischt. Hierzu ist es notwendig, die Wachsmischung mindestens auf eine Temperatur oberhalb des Erstarrungspunktes des höherschmelzenden Wachses zu erhöhen, da das höherschmelzende Wachs ansonsten in der Wachsmischung als Feststoff ausfallen kann und im nachfolgenden Prozess stört. Dieses Verfahren hat sich zwar bewährt, jedoch ist es sehr energieintensiv.

Aufgabe der vorliegenden Erfindung ist es, ein Hydrophobierungsmittel in Form einer wasserbasierten Wachsdispersion zur Herstellung von Holzwerkstoffen bereitzustellen, das energieeffizient herstellbar ist und möglichst positive Einflüsse auf die mechanischen Eigenschaften des Holzwerkstoffes hat.

Obige Aufgabe wird gelöst durch die erfindungsgemäße Wachsdispersion bzw. das beanspruchte Verfahren gemäß den unabhängigen Ansprüchen. Bevorzugte Ausführungsformen sind Gegenstand der Unteransprüche oder nachfolgend beschrieben.

Die erfindungsgemäßen Wachsdispersionen weisen auf:
20 Gew.% bis 80 Gew.% Wasser als kontinuierliche Phase,
0,5 Gew.% bis 10 Gew.% mindestens eines Emulgators, und
   a) 20 Gew.% bis 80 Gew.% Wachse, die disperse Phase bildend, wobei Wachspartikel von mindestens zwei unterschiedlichen Wachsen separat in der Wachsdispersion als Feststoffe vorliegen und die kontinuierliche Phase der Wachsdispersion Wasser ist und
   b) mindestens zwei der separat in der Dispersion vorliegenden Wachse zu größer 85 Gew.%, vorzugsweise zu größer 98 Gew.%, ein oder mehrere langkettige Kohlenwasserstoffe mit im Mittel mehr als 20 Kohlenstoffatomen sind und
   c) mindestens zwei der separat in der Dispersion vorliegenden Wachse einen Erstarrungspunkt von 35 °C bis 150 °C aufweisen und
wobei bezogen auf das Trockengewicht des Holzwerkstoffes 0,1 Gew.% bis 5 Gew.% Wachsfeststoffe eingebracht sind.

Überraschend hat sich gezeigt, dass Wachsdispersionen als Hydrophobierungsmittel bei der Herstellung von Holzwerkstoffen eine verbesserte Hydrophobierungswirkung zeigen, wenn die eingesetzten Wachse als separate Partikel in der Wachsdispersion vorliegen, als wenn die eingesetzten Wachse zunächst aufgeschmolzen, homogen vermischt und anschließend emulgiert werden. Gleichzeitig wurde die mechanische Stabilität in Form der Querzugfestigkeit wesentlich erhöht.

Ein weiterer Vorteil ist, dass die erfindungsgemäßen Wachsdispersionen wesentlich energieeffizienter hergestellt werden können, wenn sich der Erstarrungspunkt der Wachse unterscheidet.

Besonders geeignet sind obige Wachsdispersion mit
20 Gew.% bis 60 Gew.%, insbesondere von 30 % Gew. % bis 50 Gew. % oder sogar nur 20 Gew.% bis 40 Gew.%, Wasser als kontinuierliche Phase,
0,5 Gew.% bis 6 Gew.% eines Emulgators oder mehrerer Emulgatoren und
40 Gew.% bis 70 Gew.% Wachse als disperser Phase, wobei mindestens zwei der in der Dispersion vorliegenden Wachse zu größer 98 Gew.% ein oder mehrere langkettige Kohlenwasserstoffe mit im Mittel 20 Kohlenstoffatomen sind.

Der Schmelzpunkt von mindestens zwei Wachsen der separat in der Wachsdispersion vorliegenden Wachspartikel unterscheidet sich vorteilhafterweise um mind. 10°C.

Vorzugsweise hat mindestens ein Wachs, der separat in der Wachsdispersion vorliegenden Wachse einen Schmelzpunkt von mindestens 75°C bei Normaldruck.

Vorzugsweise beinhaltet zumindest ein Wachs, der separat in der Wachsdispersion vorliegenden Wachse ein Fischer-Tropsch-Wachs oder ein Polyethylenwachs.

Der Anteil an Normalparaffinen von mindestens zwei der separat in der Wachsdispersion vorliegenden Wachse unterscheidet sich vorteilhafterweise um mind. 5 Gew. %.

Mindestens zwei Wachse liegen vorteilhafterweise in einem Mengenverhältnis von 1:100 bis 100:1 als separate Partikel in der Wachsdispersion vor.

Die separat in der Wachsdispersion vorliegenden Wachspartikel mit unterschiedlichen Emulgatoren stabilisiert sind und die Wachsdispersion von 40 Gew.% bis 80 Gew.%, insbesondere von 50 Gew.% bis 80 Gew.%, oder sogar 60 Gew.% bis 80 Gew.%, Wachsfeststoffe als disperse Phase aufweist. Der Emulgator umfasst oder besteht vorzugsweise aus einem oder mehreren anionischen Emulgatoren. Dies können Fettsäuren, verseifte Fettsäuren und/oder Fettsäuren-Derivate aufweisend Carboxylgruppen ggf. verseift sein.

Die kontinuierliche Phase der Wachsdispersionen ist Wasser, die diskontinuierliche Phase die Wachse, wobei die Wachse im Wesentlichen, vorzugsweise vollständig, aus langkettigen Kohlenwasserstoffen bestehen. Kohlenwasserstoffe im Sinne der vorliegenden Erfindung sind Verbindungen die ausschließlich aus Kohlenstoff und Wasserstoff bestehen und Erstarrungspunkte von 35 °C bis 150 °C bei Normaldruck aufweisen, insbesondere bei mittleren C-Zahlen von mindestens 20 Kohlenstoffatomen. Als Kohlenwasserstoffe kommen gesättigte oder ungesättigte Kohlenwasserstoffe in Frage.

Die Wachse können erdölbasierte Paraffinwachse, Weichwachse, Fischer-Tropsch Wachse, Polyethylenwachse, Olefinwachse (Alphaolefinwachse), aus Mischungen dieser bestehen und/oder Raffinationsprodukte dieser sein. Nachfolgend sind für den erfindungsgemäßen Einsatz geeignete Typen beschrieben.

Die langkettigen gesättigten aliphatischen Kohlenwasserstoffe werden häufig als Paraffinwachse bezeichnet. Die in der Industrie üblicherweise verwendeten Paraffinwachse sind Produkte der Erdölraffination und bestehen hauptsächlich aus Mischungen von bei über 35 °C festen n- und iso-Alkanen unterschiedlicher Mengenverhältnisse.

Die einsetzbaren Paraffinwachse können in makro- und mikrokristalline Wachse eingeteilt werden. Makrokristalline Wachse bestehen vorwiegend aus gesättigten, geradkettigen, unverzweigten Kohlenwasserstoffen (n-Alkane) und besitzen ein Molekulargewicht, das etwa zwischen 280 (g/mol) und 700 (g/mol) liegt (Anzahl der Kohlenstoffatome in der Kette zwischen 20 und etwa 50).

Im Unterschied zu den makrokristallinen Paraffinen bestehen die mikrokristallinen Paraffine vorwiegend aus verzweigen Alkanen (iso-Alkane) und gesättigten ringförmigen Kohlenwasserstoffen (Cycloalkane). Der Schmelzbereich liegt zwischen 60°C und 90 °C. Mikrokristalline Paraffine sind auch durch Hydroisomerisierung von Fischer-Tropsch-Wachsen zugänglich.

Unter Fischer-Tropsch Wachs wird das durch die Fischer-Tropsch-Synthese gewonnene Paraffin verstanden. Fischer-Tropsch -Paraffine bestehen vornehmlich nur aus Normal-Paraffinen. Mehr als 90% sind gewöhnlich Normal-Paraffine. Der Iso-Paraffinanteil steigt bei Fischer-Tropsch -Paraffinen, im Unterschied zu erdölbasierten Paraffinwachsen, mit zunehmendem Erstarrungspunkt (EP) nicht wesentlich an. Die Kettenlänge liegt bei ca. C20 bis etwa C105 bei einer Gradation (Erstarrungspunkt, EP) von etwa 35 °C bis etwa 150 °C. Im Weiteren wird hierzu auch auf die Veröffentlichung von A. Kühnle in Fette, Seifen, Anstrichmittel 84. Jahrgang, Nr.4, Seiten 156 bis 162 verwiesen.

Polyethylenwachse (PE-Wachse) sind erhältlich durch radikalische Polymerisation von Ethylen im Hochdruckverfahren oder in Gegenwart von metallorganischen Katalysatoren in einem Niederdruckprozess. Daneben können niedrigmolekulare Produkte mit Wachscharakter durch thermischen Abbau aus hochmolekularem Polyethylen gewonnen werden. Teilweise wird Polyethylenwachs auch durch die Aufarbeitung von niedermolekularem Polyethylenen gewonnen, die als Nebenprodukt bei der Herstellung von hochmolekularem Polyethylenen anfallen. PE-Wachse sind Kohlenwasserstoffwachse mit einem mittleren Molmassenbereich von 2000 - 20000 (Massenmittel). Im Weiteren wird hierzu auch auf Ullmanns's Encyclopedia of Industrial Chemistry, 5. Auflage, Vol A28, Weinheim 1996, Kapitel Waxes 6.1. verwiesen.

Weichwachse bestehen hauptsächlich aus n- und iso-Paraffinen und bei Raumtemperatur flüssigen Kohlenwasserstoffen (Öl). Sie fallen entweder bei dem Prozess der Erdölraffination direkt an oder werden im Zuge der Entölung von Wachsen gebildet werden. Je nach Herkunft des Wachses kann der Ölgehalt bis z.B. etwa 35 Gew.% betragen. Der Schmelzpunkt bzw. Schmelzbereich liegt von z.B. 35 °C bis unter 65 °C. Weichwachse haben typischerweise eine Dichte zwischen 0.80 g/cm³ und 0.85 g/cm³ und weisen im Durchschnitt (Zahlenmittel) Kohlenwasserstoffe mit mehr als 16 Kohlenstoffatomen auf.

Alphaolefinwachse sind Kohlenwasserstoffe, die bei größer 10 °C und insbesondere bei größer 20 °C (Raumtemperatur) fest sind und eine mittlere C-Kettenlänge von 24 bis 50 Kohlenstoffatomen aufweisen. Die Alphaolefinwachse können einen Anteil an Isomeren aufweisen, z. B. solche mit Verzweigung und/oder interner Doppelbindung. Alphaolefinwachse sind vorzugsweise Ethylen-Oligomerisationsprodukte. Die Alphaolefinwachse weisen daher üblicherweise gerade Kohlenstoffanzahlen auf. Im Unterschied hierzu liegen in Paraffinen geradzahlige und ungeradzahlige Kohlenwasserstoffe nebeneinander vor. Die Alphaolefinwachse sind im weiteren Unterschied i. d. R. frei von zyklischen Kohlenwasserstoffen. Die Alphaolefinwachse enthalten vorzugsweise zu größer 50 Gew.-%, insbesondere zu größer 70 Gew.-%, Alpha-Olefine. Die Molekulargewichte der Alphaolefinwachse beträgt vorzugsweise kleiner 1000 g/mol, bezogen auf die mittleren Molekulargewichte kleiner 700 g/mol, und die Erstarrungspunkte der Alphaolefinwachse liegen vorzugsweise unter 80 °C.

Die Dispersion wird mit einem oder mehreren Emulgatoren stabilisiert. Emulgatoren sind grenzflächenaktive amphotere Substanzen oder hochmolekulare Substanzen. Der Emulgator kann anionisch, kationisch, nicht-ionogen oder von Betain-Struktur sein, vorzugsweise anionisch. Als Emulgatoren seien genannt: - Alkoholpolyethylenglykolether, z.B. solche der allgemeinen Formel R-O-(R^O)ₙ-H, Fettsäureesterpolyethylenglykolether, z.B. solche der allgemeinen Formel R-COO-(R¹ -O)ₙ-H, Alkylpolyalkylenglykolethercarbonsäuren, z.B. solche der allgemeinen Formel R-O-(R^O)ₙ-CH₂-COOH bzw. deren Alkanolammonium- oder Alkali- oder Erdalkalimetallsalze, Alkylamidoalkylbetaine, z.B. solche der allgemeinen Formel R-CONH(CH₂)_{U}N⁺(CH₃)₂- CH₂-COO-, Aminoxide, z.B. solche der allgemeinen Formel R-NO(CH₃ )₂, wobei jeweils R einen verzweigten oder linearen, gesättigten oder ungesättigten C₈- bis C₂₀- bzw. C₇- bis C₁Cr Kohlenwasserstoffrest, n eine Zahl von 2 bis 20, R¹ einen Alkylenrest mit 2 bis 4 Kohlenwasserstoffen, z.B. - C₂H₄- oder -C₃H₆-, ggf. für jedes n verschieden, und u eine Zahl von 1 bis 10 darstellt, Produkte aus der Alkoxylierung von Triglyceriden, die ganz oder teilweise mit C₆- bis C₂₂ - Fettsäuren verestert sind, wobei pro Mol Triglycerid 2 bis 40 Mol Alkoxylierungsmittel eingesetzt werden, - partiell neutralisierte Partialglyceride von ein oder mehrwertigen C2- bis C22- Carbonsäuren, wie z.B. Linolsäure, Stearinsäure, Iso Stearinsäure, Palmitinsäure, Laurinsäure, Caprylsäure, Caprinsäure, Citronensäure und/oder Milchsäure, Ester des Polyglycerins, worin die Carbonsäure-Gruppe vorzugsweise 2 bis 22 Kohlenstoffatome aufweist, - C6- bis C32-Carbonsäuren, insbesondere C8- bis C26- Fettsäuren vollständig oder partiell, insbesondere vollständig verseift, z.B. mit Aminen oder Aminverbindun- gen wie Diethanolamin.

Emulgatoren im Sinne der Erfindung sind auch hochmolekulare Substanzen wie Gummi Arabicum, Gum Ghatti oder Celluloseverbindungen. Möglich sind auch Emulgator-Gemische, z.B ein anionischer und ein nicht-ionischer oder ein anionischer und ein hochmolekularer Emulgator. Die Emulgatoren sind zu 0,2 bis 10 Gew.%, insbesondere zu 2 bis 6 Gew.%, bezogen auf die Gesamtzusammensetzung zugesetzt. Bevorzugt werden anionische Emulgatoren eingesetzt, insbesondere ausschließlich anionische Emulgatoren (d.h. keine weiteren Tenside oder Emulgatoren bzw. soweit diesbezüglich Gew.%-Angaben gemacht sind, beziehen sich diese auf die Summe der Emulgatoren und Tenside).

In herkömmlichen Wachsdispersionen liegen die Partikel in Größen von ca. 10 nm bis über 500 µm vor. Je nach eingesetztem Emulgator / Stabilisatorsystem zeigen sie eine hohe Anfälligkeit gegen Scherkräfte. Dies macht eine sorgfältige Auswahl der eingesetzten Pumpen erforderlich.

Der Emulgierprozess gliedert sich in der Regel in folgende Abschnitte: Vormischen der einzelnen Komponenten zu einer grobdispersen Voremulsion (Premix) und Feinemulgieren durch Tropfenaufbruch beim Überschreiten der kritischen Deformation und Stabilisieren der neu entstandenen Phasengrenzflächen durch den Emulgator. Abkühlen der Wachsdispersion.

Als Emulgierapparat sei ein Rotor-Stator-Mixer genannt. Die zerkleinerungswirksame Energie wird durch rotierende Teile eingebracht. Sie können batchweise oder quasikontinuierlich betrieben werden und ermöglichen die Kombination verschiedener Verfahrensschritte in einem Prozessapparat (wie das Mischen der Komponenten, das Emulgieren und eine gezielte Temperaturführung zum Pasteurisieren und/oder Abkühlen).

Hochdruckhomogenisatoren basieren auf einer Hochdruckpumpe und einer Homogeni- sierdüse. Die Hochdruckpumpe baut die Energie auf, die dann durch Entspannen im Homogenisierventil zur Tropfenzerkleinerung genutzt werden kann. Drücke von hundert bis einige hundert bar sind in den Hochdruckhomogenisatoren anwendbar, in Spezialfällen bis zu tausend bar.

Die vorliegenden Wachse lassen sich durch Schmelzemulgieren in feinteilige Dispersionen überführen, z.B. mittels eines Hochdruckhomogenisators und einem Homogenisierdruck von 120 bar.

In Abhängigkeit des Schmelzpunktes der Wachse erfolgt das Aufschmelzen und / oder die Herstellung des Premix in einem Autoklaven. Inbesondere ist dies bevorzugt bei Wachsen mit einem Erstarrungspunkt von >90 °C bei Normaldruck.

Gegenstand der Erfindung sind wässrige Wachsdispersionen, welche als disperse Phase mindestens zwei unterschiedliche Wachse als separate Feststoffteilchen mit mittleren Teilchendurchmessern von 10 nm bis 10 µm, vorzugsweise von 50 bis 500 nm, und insbesondere von 100 bis 200 nm aufweisen.

Die erfindungsgemäßen Wachsdispersionen können erzeugt werden, indem die einzelnen Wachse zunächst separat emulgiert, die erzeugten Wachsdispersionen dann unter den Schmelzpunkt des jeweiligen Wachses gekühlt werden und die so hergestellten Wachsdispersionen miteinander homogen vermischt werden, z.B. mittels Rühren. Die Vermischung der einzelnen Wachsdispersionen kann auch direkt vor dem Kontaktieren der Fasern, Späne oder Strands beim Holzwerkstoffherstellungsprozess erfolgen, z.B. durch hochturbulentes Mischen.

Überraschend hat sich gezeigt, dass Wachsdispersionen als Hydrophobierungsmittel bei der Herstellung von Holzwerkstoffen eine verbesserte Hydrophobierungswirkung zeigen, wenn die eingesetzten Wachse als separate Partikel in der Wachsdispersion vorliegen, als wenn die eingesetzten Wachse zunächst aufgeschmolzen, homogen vermischt und anschließend emulgiert werden. Gleichzeitig wurde die mechanische Stabilität in Form der Querzugfestigkeit wesentlich erhöht.

Ein weiterer Vorteil ist, dass die erfindungsgemäßen Wachsdispersionen wesentlich energieeffizienter hergestellt werden können, zumindest, wenn sich der Erstarrungspunkt der Wachse unterscheidet.

Wenn die eingesetzten Wachse in bisheriger Weise zunächst aufgeschmolzen und miteinander vermischt werden ist es notwendig, die Wachsmischung mindestens auf eine Temperatur oberhalb des Erstarrungspunktes des höherschmelzenden Wachses zu erhöhen, da das höherschmelzende Wachs ansonsten in der Wachsmischung als Feststoff ausfallen kann und im nachfolgenden Prozess stört. Liegt der Erstarrungspunkt des höherschmelzenden Wachses bei >90 °C, müsste der Premixprozess der gesamten Emulsionsherstellung zusätzlich in einen Autoklaven bei erhöhtem Druck ausgeführt werden.

Im Falle der Herstellung der erfindungsgemäßen Wachsdispersion muss nur jedes eingesetzte Wachs bis kurz oberhalb des jeweiligen Erstarrungspunktes erwärmt werden. Dies ist bei unterschiedlichen Erstarrungspunkten der eingesetzten Wachse wesentlich energieeffizienter.

Wachse als Festwachs oder in Form von Dispersionen werden bei der Herstellung von Holzwerkstoffen auf Basis von Strands, Spänen oder Fasern zugegeben, um deren Hydrophobierung, insbesondere in Form von Platten, zu bewirken und vor allem die Wasseraufnahme und das hierdurch verursachte Quellen zu verringern. Als Messwert wird häufig die Wasseraufnahme und die Dickenquellung nach 2 h , 24 h oder 48 h Lagerung in Wasser herangezogen (z.B. nach DIN EN 622 und DIN EN 312).

Die Hydrophobierung soll einer Verringerung der mechanischen Festigkeiten unter dem Einfluss der Feuchtigkeit entgegenwirken und Längen- oder Dickenausdehnungen bei höheren Umgebungsfeuchten vermeiden helfen.

Die Wachse verlangsamen die Wasseraufnahme und die Dickenquellungsgeschwindigkeit bei Unterwasserlagerung. Neben der eigentlichen Hydrophobierungswirkung verbessern die Wachse auch die Gleitfähigkeit der Späne, Strands oder Fasern. Dies wirkt sich positiv auf die Förderbarkeit und Streufähigkeit der Späne, Strands oder Fasern aus. Der Emulgator wirkt der Hydrophobierung i.d.R. entgegen. Ziel ist es deshalb, bei der Dispersion mit möglichst wenig Emulgator auszukommen.

Die Wachse werden in Form einer wässrigen Dispersion auf die Späne aufgebracht. Die Wachsdispersionen können sowohl als Gemisch mit dem Bindemittel aufgedüst werden als auch getrennt vor oder nach der Bindemittelzugabe auf die Späne, Strands oder Fasern aufgebracht werden.

Gängig sind säurehärtende Harnstoffformaldehydharze (UF-Harze), alkalisch härtende Phenolformaldehydharze, PMDI oder Tanninformaldehydharze.

### Versuchsbeschreibung

Es wurden wässrige Paraffinwachsdispersionen mit 45% Feststoffgehalt hergestellt. Als Wachse wurde ein Fischer-Tropsch Wachs des Typs Sasolwax C80 der Firma Sasol Ltd, Südafrika mit einen Erstarrungspunkt von 80 °C und ein industrieübliches erdölbasiertes Paraffinwachs mit einem Erstarrungspunkt der Wachsphase von 53 °C, einem MEK löslichen Anteil von 21,5 % (ASTM D 3235) und einem Anteil an Normal-Paraffinen von 43% eingesetzt.

Zur Herstellung einer Vordispersion (Premix) wurde die erforderliche Menge Wasser mit einer Temperatur von ca. 90 °C in einen Rührkessel gegeben. Der Emulgator (eine C20-Fettsäure und Diethanolamin) wurden unter Rühren zum Wasser gegeben und zur Reaktion gebracht. Danach wurde die entsprechende Menge geschmolzenes Wachs unter Rühren zugegeben. Unter Rühren hat sich nach ca. 5 Minuten eine Vordispersion gebildet. Die Voremulsion wurde nun mit einem Hochdruckhomogenisator bei ca. 120 bar mit anschließender Kühlung zur Wachsdispersion weiterverarbeitet.

Zur Herstellung der Dispersion 1 (Dispersion Wachsblend) wurden die Wachse zunächst aufgeschmolzen, miteinander homogen vermischt und dann zur Wachsdispersion verarbeitet.

Zur Herstellung der Dispersion 2 (Blend zweier Dispersionen) wurden die Wachse zunächst separat aufgeschmolzen, separat zur Dispersion verarbeitet und anschließend die erhaltenden Dispersionen durch Rühren homogen miteinander vermischt.

| Variante | Beschreibung der Dispersion | Feststoffgehalt Dispersion |
|---|---|---|
| Dispersion Wachsblend (Dispersion 1) | Dispersion hergestellt aus Wachsblend enthaltend 25% Sasolwax C80 und 75% erdölbasiertes Paraffinwachs | 45,0% |
| (Homogene Wachsphase in allen Wachspartikeln) | | |
| Blend zweier Dispersionen | Blend hergestellt durch Mischen zweier Dispersionen in folgenden Anteilen: | 45,0% |
| (Dispersion 2) | | |
| (Unterschiedliche Wachse liegen als separate Partikel vor) | 25% Dispersion enthaltend 42,3% Sasolwax C80 | |
| | 75% Dispersion enthaltend 42,3% erdölbasiertes Wachs | |

### Zusammensetzung der Dispersionen:

| Komponente | Anteil (Gew.) |
|---|---|
| Wasser (Kondensat) | 55% |
| Fettsäure | 1,7% |
| Diethanolamin | 1% |
| Wachs | 42,3% |

Versuchsablauf zur Herstellung und Prüfung von Holzwerkstoffplatten:
1) Auftragen des Hydrophobierungsmittels (0,4% Feststoff bezogen auf atro Faserstoff) zusammen mit dem Bindemittel (UF-Harz; Typ K350 der Firma BASF) (7 % Feststoff bez. auf atro Fasern) auf den Faserstoff
2) Streuen der beleimten Fasern zu einer Faserstoffmatte
3) Pressen der Holzwerkstoffplatte (Hochdichte Faserplatte (HDF))
4) Schleifen und Besäumen der HDF
5) Lagerung / Konditionierung der Platten
6) Ausschneiden von Prüfkörpern
7) Ermittlung der Querzugfestigkeit (nach EN 319), der Dickenquellung nach 48 h Wasserlagerung (nach EN 317) und der Wasseraufnahme nach 48 h Wasserlagerung (in Anlehnung an EN 317)

### Ergebnisse

Überraschend hat sich gezeigt, dass diese neuartig hergestellten Dispersionen eine verbesserte Hydrophobierwirkung zeigen und gleichzeitig die Querzugfestigkeit wesentlich erhöhen. Bei Verwendung der Dispersion 2 (unterschiedliche Wachse liegen als separate Partikel vor) konnte gegenüber Verwendung der Dispersion 1 (Homogene Wachsphase in allen Wachspartikeln) die Querzugfestigkeit um 9% erhöht werden. Die Dickenquellung nach 48 h konnte um 10% reduziert werden und die Wasseraufnahme nach 48 h konnte ebenfalls um 10% reduziert werden.

## Patentansprüche

1. Verwendung einer Wachsdispersion als Hydrophobierungsmittel für Lignocellulosen in Form von Fasern, Spänen oder Strands bei der Herstellung von Holzwerkstoffen, wobei die Wachsdispersion aufweist
20 Gew.% bis 80 Gew.% Wasser als kontinuierliche Phase,
0,5 Gew.% bis 10 Gew.% mindestens eines Emulgators und
a) 20 Gew.% bis 80 Gew.% Wachse, die disperse Phase bildend, wobei Wachspartikel von mindestens zwei unterschiedlichen Wachsen separat, in der Wachsdispersion vorliegen und die kontinuierliche Phase der Wachsdispersion Wasser ist und
b) mindestens zwei der separat in der Dispersion vorliegenden Wachse zu größer 85 Gew.%, ein oder mehrere langkettige Kohlenwasserstoffe mit im Mittel mehr als 20 Kohlenstoffatornen sind und
c) mindestens zwei der separat in der Dispersion vorliegenden Wachse einen Erstarrungspunkt von 35 °C bis 150 °C aufweisen, und
wobei unter Kontaktieren der Fasern, Späne oder Strands mit der Wachsdispersion zur Aufbringung der Wachse auf die Fasern, Späne oder Strands und Verpressen ein Holzwerkstoff erhalten wird, enthaltend die Fasern, Späne oder Strands und ggf. weiterer Bestandteile und wobei bezogen auf das Trockengewicht des Holzwerkstoffes 0,1 Gew.% bis 5 Gew.% Wachsfeststoffe eingebracht sind.

2. Verwendung der Wachsdispersion nach Anspruch 1, **dadurch gekennzeichnet, dass** die Wachsdispersion aufweist
20 Gew.% bis 60 Gew.%, Wasser als kontinuierliche Phase,
0,5 Gew.% bis 6 Gew.% eines Emulgators und
40 Gew.% bis 70 Gew.%, Wachse als disperse Phase,
wobei mindestens zwei der separat in der Dispersion vorliegenden Wachspartikel zu größer 98 Gew.%, ein oder mehrere langkettige Kohlenwasserstoffe mit im Mittel mehr als 20 Kohlenstoffatomen sind.

3. Verwendung der Wachsdispersion nach zumindest einem der vorhergehenden Ansprüche, **dadurch gekennzeichnet, dass** mindestens ein Wachs, der separat in der Wachsdispersion vorliegenden Wachse einen Schmelzpunkt von mindestens 75 °C bei Normaldruck aufweist.

4. Verwendung der Wachsdispersion nach zumindest einem der vorhergehenden Ansprüche, **dadurch gekennzeichnet, dass** der Anteil an Normalparaffinen von mindestens zwei der separat in der Wachsdispersion vorliegenden Wachse sich um mind. 5 Gew. % unterscheidet.

5. Verwendung der Wachsdispersion nach zumindest einem der vorhergehenden Ansprüche, **dadurch gekennzeichnet, dass** mindestens ein Wachs, der separat in der Wachsdispersion vorliegenden Wachse ein Fischer-Tropsch-Wachs ist bzw. dieses enthält.

6. Verwendung der Wachsdispersion nach zumindest einem der vorhergehenden Ansprüche, **dadurch gekennzeichnet, dass** mindestens ein Wachs, der separat in der Wachsdispersion vorliegenden Wachse ein Polyethylenwachs, ein erdölbasiertes Paraffinwachs, ein Weichwachs, oder ein Olefinwachs (Alphaolefinwachs) ist bzw. dieses enthält.

7. Verwendung der Wachsdispersion nach zumindest einem der vorhergehenden Ansprüche, **dadurch gekennzeichnet, dass** mindestens zwei Wachse in einem Mengenverhältnis von 1:100 bis 100:1 als separate Partikel in der Wachsdispersion vorliegen.

8. Verfahren zum Hydrophobieren von Werkstoffen hergestellt unter Verwendung von Fasern, Spänen oder Strands enthaltend oder bestehend jeweils aus Lignocellulosen mit einer Wachsdispersion, **dadurch gekennzeichnet, dass** die Wachsdispersion Wasser, Emulgator und Wachse mit einem Erstarrungspunkt von 35 °C bis 150 °C enthält, wobei die Wachse mehrere langkettige Kohlenwasserstoffe mit im Mittel mehr als 20 Kohlenstoffatomen umfassen, mindestens zwei unterschiedliche Wachse separat in der kontinuierlichen Phase dispergiert sind, die kontinuierliche Phase Wasser ist, und das Verfahren die folgenden Schritte umfasst:
a) Bereitstellen der Wachsdispersion,
b) Kontaktieren der Fasern, Späne oder Strands mit der Wachsdispersion zur Aufbringung der Wachse auf die Fasern, Späne oder Strands und
c) Verpressen zum Werkstoff enthaltend die Fasern, Späne oder Strands und ggf. weitere Bestandteile,
wobei bezogen auf das Trockengewicht des Holzwerkstoffes 0,1 Gew.% bis 5 Gew.% Wachsfeststoffe eingebracht sind.

## Claims

1. Use of a wax dispersion as a hydrophobizing agent for lignocelluloses in the form of fibers, shavings or strands in the production of wood-based materials, wherein the wax dispersion comprises
20% by weight to 80% by weight of water as the continuous phase
0.5% to 10% by weight of at least one emulsifier and
a) 20% to 80% by weight of waxes forming the disperse phase, wherein wax particles of at least two different waxes are present separately in the wax dispersion and the continuous phase of the wax dispersion is water and
b) at least two of the waxes present separately in the dispersion are to an extent of at least 85% by weight one or more long-chain hydrocarbons having on average more than 20 carbon atoms and
c) at least two of the waxes present separately in the dispersion have a solidification point of 35°C to 150°C and
wherein contacting of the fibers, shavings or strands with the wax dispersion to apply the wax to the fibers, shavings or strands and pressing affords a wood-based material containing the fibers, shavings or strands and optionally further constituents and wherein, based on the dry weight of the wood-based material 0.1% to 5% by weight of wax solids have been incorporated.

2. Use of the wax dispersion according to claim 1, **characterized in that** the wax dispersion comprises
20% by weight to 60% by weight of water as the continuous phase,
0.5% by weight to 6% by weight of an emulsifier and
40% by weight to 70% by weight of waxes as the disperse phase,
wherein at least two of the wax particles present separately in the dispersion are to an extent of at least 98% by weight one or more long-chain hydrocarbons having on average more than 20 carbon atoms.

3. Use of the wax dispersion according to at least one of the preceding claims, **characterized in that** at least one wax of the waxes present separately in the wax dispersion has a melting point of at least 75°C at standard pressure.

4. Use of the wax dispersion according to at least one of the preceding claims, **characterized in that** the proportion of normal paraffins of at least two of the waxes present separately in the wax dispersion differs by at least 5% by weight.

5. Use of the wax dispersion according to at least one of the preceding claims, **characterized in that** at least one wax of the waxes present separately in the wax dispersion is a Fischer-Tropsch wax or contain such a wax.

6. Use of the wax dispersion according to at least one of the preceding claims, **characterized in that** at least one wax of the waxes present separately in the wax dispersion is a polyethylene wax, a crude oil-based paraffin wax, a soft wax or an olefin wax (alpha-olefin wax) or contains such a wax.

7. Use of the wax dispersion according to at least one of the preceding claims, **characterized in that** at least two waxes are present in the wax dispersion as separate particles in a quantity ratio of 1:100 to 100:1.

8. Process for hydrophobizing materials produced using fibers, shavings or strands, in each case containing or consisting of lignocelluloses, with a wax dispersion, **characterized in that** the wax dispersion contains water, emulsifier and waxes having a solidification point of 35°C to 150°C, wherein the waxes contain a plurality of long-chain hydrocarbons having on average more than 20 carbon atoms, at least two different waxes are dispersed in the continuous phase separately, the continuous phase is water and the process comprises the steps of:
a) providing the wax dispersion,
b) contacting the fibers, shavings or strands with the wax dispersion to apply the waxes to the fibers, shavings or strands and
c) pressing to afford the material containing the fibers, shavings or strands and optionally further constituents,
wherein based on the dry weight of the wood-based material 0.1% by weight to 5% by weight of wax solids are incorporated.

## Revendications

1. Utilisation d'une dispersion de cire en tant qu'agent hydrophobisant pour des lignocelluloses sous forme de fibres, de copeaux ou de brins lors de la préparation de matériaux de bois, la dispersion de cire présentant
20 % en poids à 80 en % en poids d'eau en tant que phase continue,
0,5 % en poids à 10 % en poids d'au moins un émulsifiant et
a) 20 % en poids à 80 % en poids de cires, qui forment des phases dispersées, des particules de cire d'au moins deux cires différentes étant présentes de manière séparée dans la dispersion de cire et la phase continue de la dispersion de cire étant de l'eau et
b) au moins deux des cires présentes de manière séparée dans la dispersion étant, à raison de plus de 85 % en poids, un ou plusieurs hydrocarbures à chaîne longue comportant en moyenne plus de 20 atomes de carbone et
c) au moins deux des cires présentes de manière séparée dans la dispersion présentant un point de solidification de 35 °C à 150 °C, et
un matériau de bois étant obtenu, par mise en contact des fibres, des copeaux ou des brins avec la dispersion de cire pour l'application des cires sur les fibres, les copeaux ou les brins et compression, contenant les fibres, les copeaux ou les brins et éventuellement d'autres ingrédients et 0,1 % en poids à 5 % en poids de solides de cire étant introduits par rapport au poids sec du matériau de bois.

2. Utilisation de la dispersion de cire selon la revendication 1, **caractérisée en ce que** la dispersion de cire présente
20 % en poids à 60 % en poids d'eau en tant que phase continue,
0,5 % en poids à 6 % en poids d'un émulsifiant et
40 % en poids à 70 % en poids de cires en tant que phase dispersée,
au moins deux des particules de cire présentes de manière séparée dans la dispersion étant, à raison de plus de 98 % en poids, un ou plusieurs hydrocarbures à chaîne longue comportant en moyenne plus de 20 atomes de carbone.

3. Utilisation de la dispersion de cire selon au moins l'une des revendications précédentes, **caractérisée en ce qu'**au moins une cire des cires présentes de manière séparée dans la dispersion de cire présente un point de fusion d'au moins 75 °C à pression normale.

4. Utilisation de la dispersion de cire selon au moins l'une des revendications précédentes, **caractérisée en ce que** la proportion en paraffines normales d'au moins deux des cires présentes de manière séparée dans la dispersion de cire diffère d'au moins 5 % en poids.

5. Utilisation de la dispersion de cire selon au moins l'une des revendications précédentes, **caractérisée en ce qu'**au moins une cire des cires présentes de manière séparée dans la dispersion de cire est une cire de Fischer-Tropsch, respectivement contient celle-ci.

6. Utilisation de la dispersion de cire selon au moins l'une des revendications précédentes, **caractérisée en ce qu'**au moins une cire des cires présentes de manière séparée dans la dispersion de cire est une cire de polyéthylène, une cire de paraffine à base de pétrole, une cire molle, ou une cire d'oléfine (cire d'alphaoléfine), respectivement contient celle-ci .

7. Utilisation de la dispersion de cire selon au moins l'une des revendications précédentes, **caractérisée en ce qu'**au moins deux cires sont présentes en un rapport de quantités de 1 : 100 à 100 : 1 en tant que particules séparées dans la dispersion de cire.

8. Procédé pour l'hydrophobisation de matériaux préparés en utilisant des fibres, des copeaux ou des brins contenant à chaque fois des lignocelluloses avec une dispersion de cire ou constitué(e)s à chaque fois de celles-ci, **caractérisé en ce que** la dispersion de cire contient de l'eau, un émulsifiant et des cires dotées d'un point de solidification de 35 °C à 150 °C, les cires comprenant plusieurs hydrocarbures à chaîne longue comportant en moyenne plus de 20 atomes de carbone, au moins deux cires différentes étant dispersées de manière séparée dans la phase continue, la phase continue étant de l'eau, et le procédé comprenant les étapes suivantes :
a) mise à disposition de la dispersion de cire,
b) mise en contact des fibres, des copeaux ou des brins avec la dispersion de cire pour l'application des cires sur les fibres, les copeaux ou les brins et
c) compression pour donner le matériau contenant les fibres, les copeaux ou les brins et éventuellement d'autres ingrédients,
dans lequel 0,1 % en poids à 5 % en poids de solides de cire sont introduits par rapport au poids sec du matériau de bois.
